Europäisches Patentamt

(19) European Patent Office

Office européen des brevets

(11) Numéro de publication: **0 1 1 3 302**
**B1**

(12) **FASCICULE DE BREVET EUROPEEN**

(45) Date de publication du fascicule du brevet:
30.04.86

(21) Numéro de dépôt: **83430038.6**

(22) Date de dépôt: **28.11.83**

(51) Int. Cl.⁴: **E 05 G 1/02, F 16 B 41/00**

(54) **Coffre-fort.**

(30) Priorité: **29.12.82 FR 8222211**

(43) Date de publication de la demande:
**11.07.84 Bulletin 84/28**

(45) Mention de la délivrance du brevet:
**30.04.86 Bulletin 86/18**

(84) Etats contractants désignés:
**AT BE CH DE GB IT LI NL SE**

(56) Documents cités:
**CH - A - 461 305**
**FR - A - 1 347 365**
**GB - A - 693 319**
**GB - A - 2 081 335**
**US - A - 4 161 896**

(73) Titulaire: **Rodrigues, Joannes Louis, 9 rue Pablo Neruda, F-42300 Roannes (FR)**

(72) Inventeur: **Rodrigues, Joannes Louis, 9 rue Pablo Neruda, F-42300 Roannes (FR)**

(74) Mandataire: **Roman, Alphonse, 35 Rue Paradis, F-13001 Marseille (FR)**

## Description

L'invention a pour objet un coffre-fort.

L'objet de l'invention se rattache notamment au secteur technique des coffres-forts ou chambres fortes pour objets de valeur.

Généralement, les coffres-forts sont exécutés à partir d'une ossature blindée et présentent une porte d'accès à l'intérieur du coffre. Le plus souvent, les portes d'accès sont équipées d'un mécanisme de serrure complexe commandé à partir de combinaisons les plus diverses. Quel que soit le degré de complexité du mécanisme d'ouverture, une fois que celui-ci est maîtrisé, on a libre accès à l'interieur du coffre aussi bien pour l'introduction que pour le retrait d'objets.

Un tel concept technologique peut engendrer cer-tains inconvénients dans le cas par exemple d'une ouverture forcée ou par effraction de la porte d'accès puisque l'on a un accès direct au contenu du coffre.

L'invention s'est fixée pour but, d'une manière particulièrement simple et avantageuse, de remédier à ces inconvénients en réalisant un coffre-fort qui est conformé et agencé de sorte que, après avoir ouvert la porte d'accès, on est susceptible uniquement de déposer dans le coffre certains objets mais pas de les retirer. La possibilité et la faculté de retirer une partie ou la totalité du contenu du coffre s'effectue seulement dans un ou des intervalles de temps prédéterminés en vingt-quatre heures.

A cet effet, selon la revendication 1, le coffre comprend intérieurement un conteneur présentant sur une même face, une partie ouverte pour avoir libre accès à l'intérieur dudit conteneur et une partie pleine avec une fente pour permettre uniquement l'introduction limitée d'objet, le conteneur étant montéà coulissement vertical guidé au moyen d'un organe de commande qui est asservi à une horloge de programmationpour assurer le déplacement en hauteur dudit conteneur en vue de son positionnement judicieux, pendant un intervalle de temps prédéterminé en regard d'une porte d'accès que présente la face avant du coffre en vue de communiquer soit avec la partie largement ouverte, soit avecla fente relative à la partie pleine.

D'autres caractéristiques indiquées dans les revendications 2 à 11 ressortiront dela suite de la description.

Pour fixer l'objet de l'invention, sans toutefois le limiter, dans les dessins annexés:

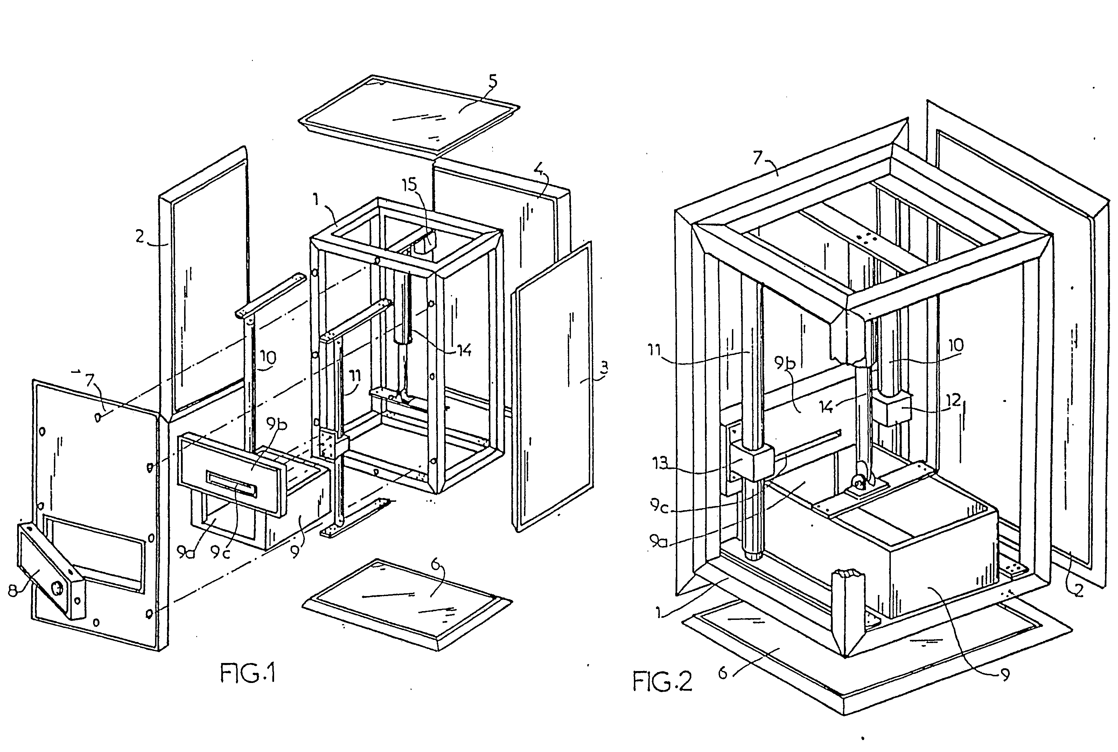

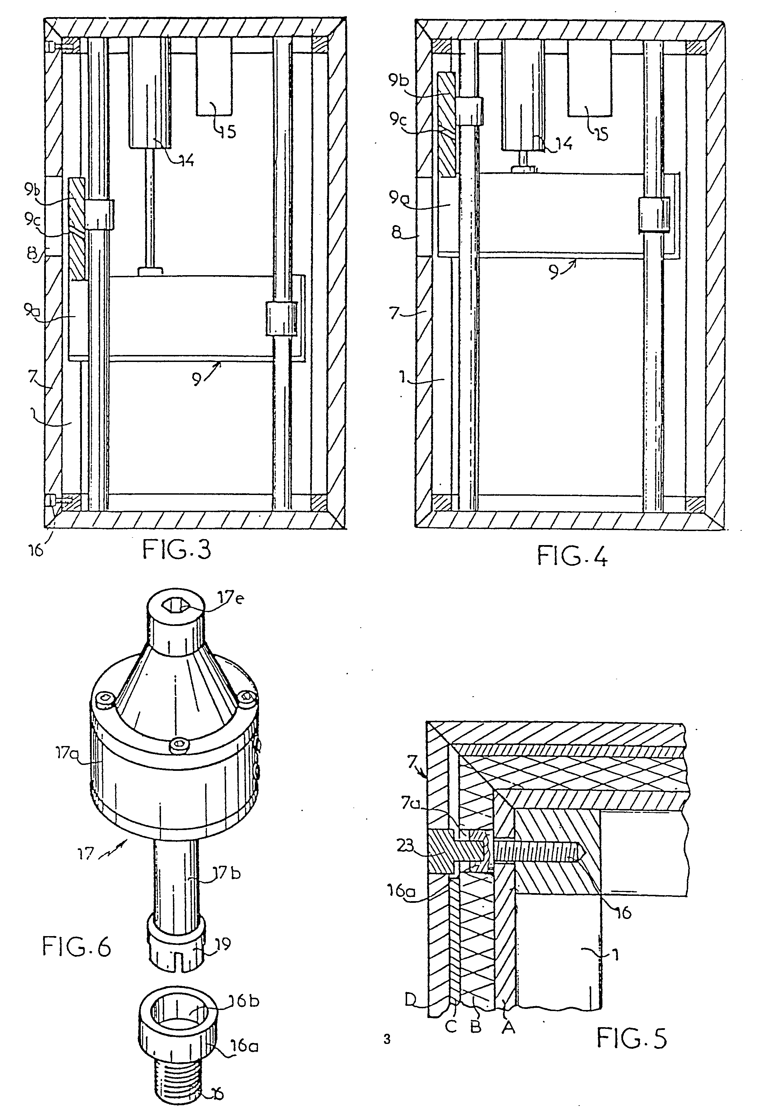

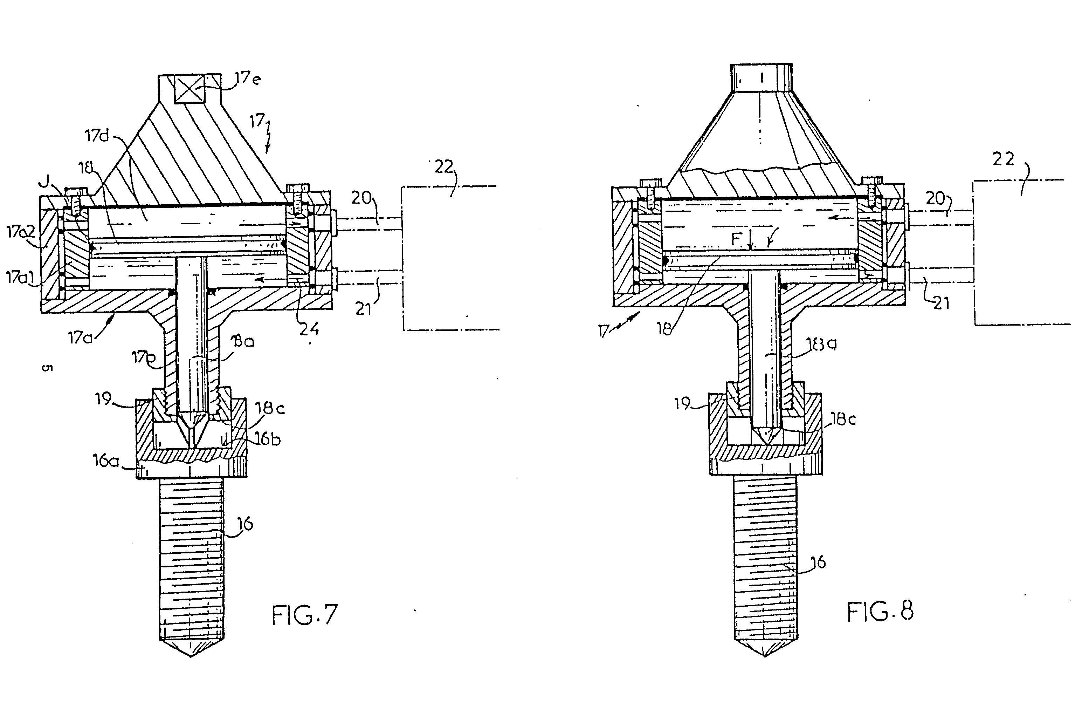

La figure 1 est une vue éclatée en perspective des différentes parties constitutives du coffre; la figure 2 est une vue en perspective du coffre après montage de certaines parties; les figures 3 et 4 sont des vues en coupe longitudinale à caractère schématique montrant le principe de fonctionnement du coffre;, la figure 5 est à une échelle plus importante, une vue partielle en coupe montrant notamment la fixation d'une manière inviolable de la face avant du coffre recevant la porte d'accès;la figure 6 est une vue en perspective de l'organe de manoeuvre nécessaire aux démontages des vis de fixation de la face avant du coffre; les figures 7 et 8 montrent le principe de fonctionnement de l'organe de manoeuvre illustré figure 6.

Afin de rendre plus concret l'objet de l'invention, on le décrit maintenant d'une manière non limitative en se référant aux exemples de réalisation des figures des dessins.

Comme le montre la figure 1, le coffre comprend essentiellement une ossature métallique rigide 1 parallélépipédique, réalisée par un assemblage indémontable d'élément de section pleine notamment de tous profils conférant une très grande rigidité tant transversale que latérale.

L'ossature 1 est destinée à recevoir les parois laté rales 2 et 3, la paroi arrière 4, le dessus 5 et le fond 6, ainsi que la paroi avant 7 equipée de la porte d'accès 8.

Selon l'invention, le coffre est équipé intérieurement d'un conteneur 9 qui est monté à libre coulissement lelong de colonnes verticales de guidage 10 et 11, au moyen par exemple de coulisseaux 12 et 13 fixés sur une partie appropriée du conteneur 9.

D'une manière importante, la face avant du conteneur 9 située immédiatement derrière la paroi 7 équipée de la porte d'accès 8, présente une partie largement ouverte 9a et une partie pleine 9b dans laquelle est pratiquée une fente 9c qui débouche dans la dite partie 9a.

La partie ouverte 9a permet à la fois l'introduction et le retrait d'objets à l'intérieur du conteneur 9, tandis que la fente 9c autorise uniquement l'introduction de certains objets notamment d'épaisseur réduite, mais en aucun cas leur retrait. Le conteneur 9 est déplacé en hauteur au moyen d'un organe de commande 14 notamment un vérin électrique qui est asservi à une horloge de programmation 15 en vue du positionnement judicieux dudit conteneur 9 à un instant et pendant un intervalle de tempsprédéterminés, en regard de la porte d'accès 8 de façon à communiquer soit avec la partie largement ouverte 9a soit avec la fente 9c.

En position normale, c'est-à-dire lorsque le vérin 14 n'est pas actionné, ce qui correspond à l'état 0 de l'horloge de commande 15, seule la partie pleine 9b du conteneur équipée de la fente 9c est positionnée en face de la porte d'accès 8 (figure 3). Il en résulte donc que dans cette position, on n'a pas un accès direct à l'intérieur du conteneur 9. Il est impossible de retirer un ou des produits ou objets logés dans le conteneur 9. On peut uniquement effectuer une opération de virement ou d'introduction en utilisant la fente 9c. La partie ouverte 9a du conteneur se trouve positionnée en regard d'une partie pleine de la paroi 7 du coffre.

Lorsque l'horloge de programmation 15 passe de l'état 1 pour commander le vérin 14, celui-ci déplace en hauteur le conteneur 9 jusqu'à une position où la partie ouverte 9a est située en regard de la porte d'accès 8 (figure 4).Dans cette position, on conçoit que l'on a un accès direct à l'intérieur du conteneur pour indifféremment effectuer le retrait ou le dépôt d'objets.

La programmation de l'horloge électronique de commande 15 est déterminée de façon à passer l'état 1, un nombre de fois déterminé et variable en vingt-quatre heures et cela pendant une durée également prédéterminée. Il est bien évident que l'horloge de programmation est de tout type connu et approprié en étant sauvegardée électriquement. De meme, des butées et des capteurs de position peuvent être combinés à la commande du vérin 14 pour assurer le positionnement convenable du conteneur 9 en vue de présenter soit la fente 9c, soit la partie ouverte 9a en regard de la porte d'accès 8 comme indiqué ci-dessus.

Les parois 2, 3 et 4, le dessus 5 et le fond 6 sont soudés sur l'ossature de base 1, tandis-que la paroi 7 y est fixée d'une manière démontable, mais inviolable, pour avoir éventuellement accès au mécanisme de commande du conteneur. Dans ce but, la paroi 7 est fixée dans l'épaisseur des montants de l'ossature 1, au moyen de vis spéciales 16 dont les tetes 16a sont logées dans des chambrages 7a que présente ladite paroi 7.Les tetes 16a des vis présentent un bord périphérique rigoureusement circulaire et un chambrage axial ou non 16b également circulaire. Ces tetes 16a sont en acier de haute dureté et traitées pour être imperçables.

On conçoit donc que le pourtour des tetes 16a de vis ainsi que l'alsage 16b étant rigoureusement lisses, il n'est pas possible d'agir sur ces vis avec un organe de manoeuvre classique. Il est donc nécessaire d'employer un organe de manoeuvre 17 spécialement adapté comme le montre notamment la figure 6. A cet effet, l'organe de manoeuvre 17 présente un corps 17a conformé pour recevoir interieure ment un piston 18 dont la tige 18a déborde dudit corps en étant guidée dans un fourreau axial 17b du corps.

L'extrémité 18c de la tige du piston est profilée en bout pour coopérer avec une bague d'expansion 19 fixée d'une manière démontable en bout du fourreau 17b. Cette bague 19 est susceptible d'être engagée juste avec le jeu nécessaire dans le chambrage 16b des tetes de vis 16.

Le corps 17a de l'organe de manoeuvre est exécute en deux parties démontables dont l'une présente une cavité interne circulaire 17d dans laquelle est logée et guidée avec moyen d'étanchéité J, la tête de piston 18, ladite cavité faisant office de réservoir d'un fluide hydraulique susceptible d'agir sur ledit piston 18. A cet égard, cette cavité interne 17d est mise en communication au moyen de deux flexibles 20 et 21 ou autre, avec une pompe hydraulique 22, notamment une pompe du type aspirante foulante.

Pour le blocage et/ou de déblocage des vis 16, il suffit d'engager la bague d'expansion 19 dans le chambrage circulaire 16b desdites vis, le piston 18 n'étant pas sollicité en pression de sorte que la tige 18a n'a aucune influence sur ladite bague 19 (figure 7). On agit alors sur la pompe 22 pour envoyer du fluide sous pression, par l'intermediaire du conduit 20, derrière la tete du piston 18 en vue de créer une force de poussée F qui a pour effet de déplacer la tige 18a du piston en direction de l'extérieur, le fluide chassé étant refoule par le conduit 21. Le débordement de la tige 18a, par son extrémité profilée, entraîne l'expansion diamétrale de la bague 19 qui s'applique aussi fortement en appui circulaire sur la périphérie du chambrage 16b de la vis (figure 8). On réalise aini une liaison ferme et un accouplement entre l'organe de manoeuvre 17 et la vis 16.

Il suffit ensuite d'agir en rotation sur l'organe de manoeuvre 17 pour entraîner d'une manière concomitante la vis en vue de son déblocage (ou blocage selon le cas).

Dans ce but, la partie supérieure du corps 17a de l'organe 17 est agencé en 17e pour coopérer avec un moyen d'entraînement notamment une clé à chocs (non représentée).

Pour retirer l'organe de manoeuvre 17 eu égard à la vis 16, on agit en sens inverse sur la pompe 22 qui envoie du fluide devant la tête de piston 18 pour assurer son retrait à l'intérieur du corps de l'organe 17. Le fluide chassé est refoulé par le conduit 21 (figure 7).

D'une manière préférée, la partie du corps 17a de l'organe de manoeuvre présentant le réservoir interne 17d, est exécutée en deux éléments concentriques mobiles circulairement l'un par rapport à l'autre 17a et 17a2, de sorte que lors d'une action sur l'organe de manoeuvre 17, les flexibles 20 et 21 ne s'enroulent pas autour dudit corps. Les flexibles sont accouplés évidemment uniquement à l'élément externe 17a2 qui est indépendant, tandis que l'élément interne est accouplé à la partie du corps agencé pour coopérer avec l'organe de manoeuvre. Des joints, notamment des joints toriques, sont, d'une manière connue, convenablement montes entre les éléments tournants 17a1 et 17a2.

De même, les conduits d'alimentation 20 et 21 communiquent et débouchent dans des canaux circulaires 17f que présente périphériquement l'élément interne tournant 17a1.

On conçoit donc que, pour assurer le blocage ou le déblocage des vis d'assemblage 16, il est nécessaire d'employer l'organe de manoeuvre 17 prévu à cet effet. Une simple clé classique ou tout autre outil quelconque ne peut agir suffisamment avec force sur les vis en vue de leur manoeuvre.

Après mise en place et blocage des différentes vis 16 dont les entraxes peuvent être différents, on prévoit, d'une manière avantageuse, d'obturer les chambrages 16b desdites vis, par des capuchons 23 fixés par soudure notamment (figure 5). Les dimensions de ces capuchons 23 sont déterminées de façon à ce qu'après positionnement et fixation, ces derniers soient parfaitement dissimulés dans l'epaisseur de la paroi pour être invisibles.

D'une manière connue, les différentes parois constitutives du coffre sont blindées. Par exemple, les parois sont composées chacune, à partir de l'intérieur du coffre, d'une plaque en acier A, d'une épaisseur B qui relève d'un mélange de matière fumigène et lacrimogène, d'une plaque C en manganèse ou autre matière ou matériau imperçable et enfin d'une plaque extérieure D en acier normal On doit souligner que la partie avant pleine 9b du conteneur 9 présentant la fente 9c, est également blindée pour pallier à tous risques d'effraction lorsque ladite partie est positionnée en regard de la partie d'accès 8 du coffre.

Il est bien évident que l'ouverture de la porte d'accès 8 est commandée à partir d'un système de serrure à combinaison multiples de tout type connu et approprié.

Le coffre selon l'invention peut faire l'objet de différentes dimensions.

Les avantage ressortent bien de la description, en particulier on souligne:

- En cas d'effraction ou d'ouverture forcée de la partie d'accès, l'impossibilité d'avoir un accès direct à l'intérieur du conteneur pour retirer les objets emmagasinés.

- L'inviolabilité des vis de fixation de l'une des parois du coffre si on n'est pas en possession de l'organe de manoeuvre spécialement adapté à cet effet;

- L'effet dissuasif.

**Revendications**

1. Coffre-fort, caractérisé en ce qu'il comprend intérieurement un conteneur (9) présentant sur une même face une partie ouverte (9a) pour avoir libre accès à l'intérieur dudit conteneur et une partie pleine (9b) avec une fente (9c) pour permettre uniquement l'introduction limitée d'objet, le conteneur (9) étant monté à coulissement vertical guidé au moyen d'un organe de commande (14) qui est asservi à une horloge de programmation (15) pour assurer le déplacement en hauteur dudit conteneur en vue de son positionnement judicieux, pendant un intervalle de temps prédéterminé, en regard d'une porte d'accès (8) que présente la face avant (7) du coffre en vue de communiquer, soit avec la partie largement ouverte (9a), soit avec la fente (9c) relative à la partie pleine (9b).

2. Coffre-fort selon la revendication 1, caractérisé en ce que le conteneur (9) est monté à libre coulissement le long de colonnes verticales de guidage (10) et (11), au moyen de coulisseaux (12) et (13) fixés sur une partie appropriée du conteneur qui est commandé en hauteur au moyen d'un vérin (14).

3. Coffre-fort selon la revendication 2, caractérisé en ce qu'à l'état 0 de l'horloge de programmation (15), le vérin (14) n'est pas actionné, ce qui correspond à un positionnement de la partie pleine (9b) avec la fente (9c), en regard de la porte d'accès (8).

4. Coffre-fort selon la revendication 2, caractérisé en ce qu'à l'état 1 de l'horloge de programmation (15), le vérin (14) est actionné pour commander le déplacement en hauteur du conteneur (9) jusqu'en une position de butée selon laquelle la partie ouverte (9a) est située en regard de la porte d'accès (8).

5. Coffre-fort selon la revendication 4, caractérisé en ce que la programmation de l'horloge électronique de commande (15) est déterminée de façon à passer à l'état 1, un nombre de fois déterminé et variable en vingt-quatre heures et cela pendant une durée prédéterminée.

6. Coffre-fort selon la revendication 1, réalisé à partir d'une armature de base (1) recevant les parois latérales (2) et (3), la paroi arrière (4), le dessus (5), le fond (6) ainsi que la paroi avant (7) équipée de la porte d'accès (8), chacune desdites parois étant blindées, caractérisé en ce que les parois (2, (3, (4), (5) et (6) sont fixées sur l'ossature de base par soudure notamment, la paroi avant (7) étant fixée d'une manière démontable mais inviolable au moyen de vis (16) dont les têtes (16a) sont logées dans des chambrages (7a) que présente ladite paroi (7).

7. Coffre-fort selon la revendication 6 dont l'une des parois au moins est fixée d'une manière démontable mais inviolable au moyen de vis d'assemblage (16), caractérisé en ce que la tête (16a) des vis présente un bord périphérique rigoureusement circulaire et un chambrage axial ou non (16b) également circulaire, susceptible de coopérer avec un organe de manoeuvre (17) spécialement adapté à cet effet en vue d'agir sur la dite vis.

8. Organe de manoeuvre pour un coffre-fort selon la revendication 7, caractérisé en ce que l'organe de manoeuvre (17) présente un corps (17a) conformé intérieurement pour recevoir un piston (18) dont la tige (18a) déborde dudit corps en étant guidée dans un fourreau axial (17b) du corps; l'extrémité (18c) de la tige (18a) étant profilée en bout pour agir lors du déplacement de ladite tige, sur une bague d'expansion (19) fixée en bout du fourreau (17b) et susceptible d'être engagée juste avec le jeu nécessaire dans, le chambrage (16b) des vis (16).

9. Organe de manoeuvre selon la revendication 8, caractérisé en ce que le corps (17a) de l'organe de manoeuvre (17) est agencé pour former une cavité interne circulaire (17d) dans laquelle est logée et guidée la tête de piston (18), ladite cavité, faisant office de réservoir à un fluide hydraulique susceptible d'agir en poussée sur la tête de piston, est mise en communication par des moyens (20) et (21), à une pompe hydraulique (22), notamment une pompe aspirante et foulante.

10. Organe de manoeuvre selon la revendication 9, caractérisé en ce que la partie supérieure du corps (17a) de l'organe de manoeuvre (17) est agencée en (17e) pour coopérer avec un moyen d'entraînement notamment une clé à chocs.

11. Organe de manoeuvre selon la revendication 8, caractérisé en ce que la partie du corps (17a) de l'organe de manoeuvre présentant le réservoir interne (17d), est exécutée en deux éléments concentriques (17a1) et (17a2) mobiles circulairement l'un par rapport à l'autre, les moyens d'alimentation en fluide (20) et (21) étant accouplés à l'élément externe (17a2) qui est indépendant, tandis que l'élément interne est accouplé à la partie du corps agencé pour coopérer avec l'organe de manoeuvre, lesdits moyens (20) et (21) communiquant et débouchant dans des canaux circulaires (17f) que présente periphériquement l'élément interne tournant (17a1).

**Patentansprüche**

1. Panzerschrank dadurch gekennzeichnet, dass er im Innenteil mit einem Behälter (9), welcher an einer gleichen Seite einen offenen Teil (9a) für einen freien Zugang ins Innere dieses Behälters und einen geschlossenen Teil (9b) mit einem Schlitz (9c) zur lediglich begrenzten Einführung von Gegenständen besitzt, versehen ist, wobei der Behälter (9) senkrecht gleitet. Dieser Gleitvorgang wird durch eine mit einer Programmieruhr (15) verbundenen Steuereinrichtung (14) gesteuert, um die senkrechte Bewegung dieses Behälters in Hinsicht auf dessen richtige Positionierung während eines vorbestimmten Zeitabstandes in Bezug auf eine Zugangstur (8), die an der Vorderseite (7) des Panzerschrankes angebracht ist,um eine Verbindung entweder mit dem weitgeöffneten Teil (9a) oder mit dem Schlitz (9c) des vollen Teiles (9b) herzustellen, zu gewährleisten.

2. Panzerschrank gemäss dem Patentanspruch 1, dadurch gekennzeichnet, dass der Behälter (9) freigleitend an senkrechten Führungssäulen (10) und (11) angebracht ist. Der Gleitvorgang erfolgt mit Gleistücken (12) und (13), die an einem angemessenen Teil des Behälters angsbracht sind und deren Bewegung in Richtung der Höhe mit einem Zylinder (14) gesteuert wird.

3. Panzerschrank gemass dem Patentanspruch 2, dadurch gekennzeichnet, dass der Zylinder (14) im Zustand 0 der Programmieruhr (15) nicht betätigt wird, was der Positionierung des vollen Teiles (9b) mit dem Schlitz (9b) gegenüber der Zugangstür (8) entspricht.

4. Panzerschrank gemäss dem Patentanspruch 2, dadurch gekennzeichnet, dass der Zylinder (14) im Zustand 1 der Programmieruhr (15) betätigt wird und somit die Bewegung in Richtung der Höhe des Behälters (9) bis zu einer Anschlagposition, bei welcher der offene Teil (9a) sich gegenüber der Zugangstür (8) befindet, steuert.

5. Panzerschrank gemäss dem Patentanspruch 4, dadurch gekennzeichnet, dass die Programmierung der elektronischen Steueruhr (15) so vorbestimmt ist, dass sie innerhalb von 24 Stunden bestimmt und veränderlich oft in den Zustand 1 übergeht, und dies während einer vorbestimmten Zeitdauer.

6. Panzerschrank gemäss dem Patentanspruch 1, ab einem Grundgesell 1, welches die seitlichen Wände (2) und (3), die hintere Wand (4), den oberen Teil (5), den Boden (6) ebenso wie die vordere Wand (7) mit der Zugangstür (8) trägt, realisiert, wobei jede dieser Wände gepanzert ist, dadurch gekennzeichnet, dass die Wände (2), (3), (4), (5) und (6) an das Grundgestell angeschweisst sind, wobei die vordere Wand (7) mit Schrauben (16), deren Köpfe (16a) in die Öffnungen (7a) dieser Wand (7) eingelassen sind, abnehmbar aber nichtdurchdringbar befestigt ist.

7. Panzerschrank gemäss dem Patenanspruch 6 an welchem mindestens eine Wand abnehmbar aber nichtdurchdringbar mit Schrauben (16) befestigt ist, dadurch gekennzeichnet, dass die Schraubenköpfe (16a) einen absolut kreieförmigen Rand und eine Öffnung, die axial angeordnet ist oder nicht und ebenfalle kreisförmig ist (16b), und die mit einer speziell dafür vorgesehenen Betätigungseinrichtung (17) bewegt werden kann besitzen.

8. Betätigungseinrichtung gemäss dem Patentanspruch 7, dadurch gekennzeichnet, dass die Betätigungseinrichtung (17) mit einem Gehäuse (17a) versehen ist, dessen Innenform so ausgelegt ist, dass ein Kolben (18) darin angebracht werden kann, dessen Stange (18a) über dieses Gehäuse hinausragt und durch ein im Gehäuse axial angeordnetes Rohr (17b) geführt wird, wobei das Ende (18c) der Stange (18a) profiliert ist, um während der Bewegung der Stange auf einen am Ende des Rohres (17b) angeordneten Ausdehnungsring (19), der mit gerade dem richtigen Spiel in die Öffnung (16b) der Scrauben (16) eingeführt werden kann, einzuwirken.

9. Betätigungseinrichtung gemäss dem Patentanspruch 8, dadurch gekennzeichnet, dass das Gehäuse (17a) der Betätigungseinrichtung (17) so ausgelegt ist, dass es eine inners kreisförmige Aushöhlung (17d), in welcher der Kolbenkopf (18) angeordnet und geführt wird, bildet, wobei diese Aushöhlung, die als Behälter für eine Hydraulikflüssigkeit, welche einen Druck auf den Kolbenkopf ausüben kann,dient, mit den Teilen (20) und (21) mit einer Hydraulikpumpe (22), und zwar insbesondere mit einer Saug- und Druckpumpe, in Verbindung gesetzt wird.

10. Betätigungseinrichtung gemäss dem Patentanspruch 9, dadurch gekennzeichnet, dass der obere Teil des Gehäuses (17a) der Betätigungseinrichtung (l7)am Punkt (17e) so ausgelegt ist, dass ein Betätigungsgegenstand, und zwar insbesondere ein Anschlagschlüssel, benutzt werden kann.

11. Betätigungseinrichtung gemäss dem Patentanspruch 8, dadurch gekennzeichnet, dass derjenige Teil des Gehäuses (17a) der Betätigungseinrichtung, der den inseren Behälter darstellt (17d), in zwei konzentrischen Teile (17a1) und (17a2), die zueinander kreisförmig beweglich sind, ausgeführt ist, wobei die Teile für die Versorgung mit Flüssigkeit (20) und (21) an das externe Teil (17a2), welches unabhängig ist, angeschlossen sind, während das interne Teil an denjenigen Teil des Gehäuses, der für die Mitwirkung mit der Betätigungseinrichtung ausgelegt ist, angeschlossen ist, wobei die genannten Teile (20) und (21) mit kreisformigen Kanälen (17f), die am Umfang des internen drehenden Elementes (17a1) angebracht sind, verbunden sind und in diese einmünden.

**Claims**

1. A safe, characterized in that it includes in its inside a container (9) having on the same face an open portion (9a) provided for free access inside said container and a solid portion (9b) having a slot (9c) for allowing only the limited introduction of an object, the container (9) being guided for a vertical sliding motion by a control member (14) which is subjected to a programmation clock (15) for providing the displacement in height of said container with a view to reaching its appropriate positioning, during a predetermined interval of time, in register with an access door (8) formed in the front face (7) of the safe in order to communicate either with the widely opened portion (9a) or with the slot (9c) formed in the solid portion (9b).

2. A safe according to claim 1, wherein the container (9) is mounted so as to slide freely along vertical guiding columns (10) and (11) by means of slides (12) and (13) fixed on an appropriate portion of the container which is controlled in height by means of a jack (14).

3. A safe according to claim 2, wherein for state 0 of the programmation clock (15), jack (14) is not operated, this corresponding to a positioning of the solid portion (9b) having the slot (9c) in register with the access door (8).

4. A safe according to claim 2, wherein, for state 1 of the programmation clock (15), jack (14) is operated in order to control the displacement in height of container (9) up to a position in abutment in which the open portion (9a) is in register with the access door (8).

5. A safe according to claim 4, wherein the programmation of the control electronic clock (15) is such as to pass to state 1 a determined and variable number of times per twenty-four hours, and this during a predetermined duration.

6. A safe according to claim 1, made from a base framework (1) receiving the side walls (2) and (3), the rear wall (4), the top (5), the bottom (6) as well as the front wall (7) having the access door (8), each of said walls being armoured, wherein walls (2), (3), (4)' (5) and (6) are fixed on the base skeleton, notably by welding, the front wall (7) being fixed in a dismountable but burglar-proof manner by means of screws (16), the heads (16a) of which are housed inside recesses (7a) formed in said wall (7).

7. A safe according to claim 6, one at least of the walls of which being fixed in a dismountable but burglar-proof manner by means of assembly screws (16), wherein the heads (16a) of the screws are formed with a rigourously circular peripheral edge and with a recess (16b), axial or not, also circular, adapted for cooperating with an actuating member (17) specially adapted to this effect with a view to acting on said screw.

8. An actuating member for a safe according to claim 7, wherein the actuating member (17) has a body (17a) shaped inside for receiving a piston (18) the stem (18a) of which extends beyond said body by being guided in an axial sheath (17b) of the body; the end (l8c) of stem (18a) being profiled at its end in order to act during the displacement of said stem on an expansion ring (19) fixed at the end of sheath (19c) and adapted for being engaged, just with the necessary clearance, in the recess (16b) of screws (16).

9. An actuating member according to claim 8, wherein the body (17a) of the actuating member (17) is arranged for forming a circular inner cavity (17d) in which is housed and guided the piston head (18), said cavity, which acts as a pump for a hydraulic fluid adapted for exerting a pressure on the piston head, being set in communication by means (20) and (21) with a hydraulic pump (22), notably a sucking and forcing pump.

10. An actuating member according to claim 9, wherein the upper portion of the body (17a) of the actuating member (17) is arranged at (17e) for cooperating with a driving means, notably an impact wrench.

11. An actuating member according to claim 8, wherein the portion of the body (17a) of the actuating member having the inner tank (17d) is made of two concentrical elements (17a1) and (17a2) circularly mobile one with respect to the other, the fluid feeding means (20) and (21) being coupled to the outer element (17a2) which is independent, while the inner element is coupled to the body portion arranged for cooperating with the actuating member, said means (20) and (21) communicating and opening into circular channels (17f) formed peripherically on the rotating inner element (17a1).

0 113 302

FIG.2

FIG.1

FIG.3

FIG.4

FIG.6

FIG.5

FIG.7

FIG.8

0 113 302